Europäisches Patentamt

European Patent Office

Office européen des brevets

(19)

(11) **EP 1 356 136 B1**

(12) **EUROPEAN PATENT SPECIFICATION**

(45) Date of publication and mention
of the grant of the patent:
**24.11.2004 Bulletin 2004/48**

(51) Int Cl.[7]: **C25D 1/08**, C25D 1/04,
C25D 1/10, H01M 4/70,
H01M 4/74, F24J 2/48

(21) Application number: **02710565.9**

(22) Date of filing: **28.01.2002**

(86) International application number:
**PCT/NL2002/000064**

(87) International publication number:
**WO 2002/061184 (08.08.2002 Gazette 2002/32)**

(54) **METHOD FOR PRODUCING ELECTRICAL CONDUCTORS AND USE THEREOF FOR SOLAR
COLLECTOR AND ELECTROCHEMICAL CELL**

HERSTELLUNGSVERFAHREN FÜR ELEKTRISCHE LEITER UND DEREN VERWENDUNG FÜR
SOLARKOLLEKTOR UND ELEKTROCHEMISCHE ZELLE

PROCEDE DE FABRICATION DE CONDUCTEURS ELECTRIQUES ET LEUR UTILISATION DANS
CAPTEUR SOLAIRE ET CELLULE ELECTROCHIMIQUE

(84) Designated Contracting States:
**AT BE CH CY DE DK ES FI FR GB GR IE IT LI LU
MC NL PT SE TR**

(30) Priority: **29.01.2001 NL 1017213**

(43) Date of publication of application:
**29.10.2003 Bulletin 2003/44**

(73) Proprietor: **Stork Prints B.V.
5831 AT Boxmeer (NL)**

(72) Inventors:
• **BLANKENBORG, Stephanus, Gerardus,
Johannes
NL-6511 ZD Nijmegen (NL)**

• **MACHIELSE, Jacob, Joost
NL-5975 SE Sevenum (NL)**

(74) Representative: **Volmer, Johannes Cornelis
Exter Polak & Charlouis B.V.,
P.O. Box 3241
2280 GE Rijswijk (NL)**

(56) References cited:
**EP-A- 0 492 731          DE-A- 2 819 339
US-A- 4 228 224**

**Description**

The invention relates to a method for producing an electrical conductor suitable for use in a device for conversion of energy.

Copper screen material, which if desired may be nickel-plated, for use as current conductors in batteries and storage batteries is known per se in the art. For example, US Patent 4,328,293 discloses a positive electrode for an electrochemical cell (generator), which electrode comprises a conductive substrate which comprises, for example, a perforated and nickel-plated copper strip. Furthermore, US-A-4,228,224 discloses a copper screen material of 80 mesh which is used in a positive electrode.

These screen materials for use as electrodes are usually formed by stamping/punching or etching of a solid copper strip. However, stamping and punching leave behind sharp knurled or cut edges, which causes problems for further processing and handling. Etching is a less accurate process, and consequently the uniformity of the thickness and the hole size is unsatisfactory. Furthermore, these production techniques impose undesirable limitations on the number of openings per unit surface area, which is disadvantageous with regard to the volume for and to the contact surface with an active chemical material, such as an electrolyte paste, to be applied thereto, and with regard to adhesion.

From JP-A-51136535 a porous metal, for example, copper, foil is known for use as electrode material, which is obtained by the electroforming of a mechanically roughened substrate to form a metal foil with a thickness ranging from a few tens to a few hundreds of micrometers. The foil formed in this way is peeled off the substrate, or the substrate is dissolved. However, the reproducibility of machining of the substrate is low, so that products with different characteristics of the pores, such as the dimensions thereof, and therefore also of the overall conductivity, are in each case obtained. Moreover, it is unclear how the pores are obtained in accordance with this Japanese Patent Application.

The present invention is based on the general object of avoiding the above drawbacks. In particular, it is an object of the invention to provide electrical conductors having a large volume, contact surface area and good adhesion for active chemical material. Additionally, it is an object of the invention to provide an alternative way of roughening the conductor.

To this end, according to the invention, a method for the production of an electrical conductor, which conductor comprises a copper-containing screen material, is characterized in that the method comprises the steps of:

a) using electrodeposition to deposit a copper skeleton on conductive parts of an electroforming matrix in an electrodeposition bath, and
b) removing the deposited copper skeleton from the electroforming matrix, the screen material having a density of openings which lies in the range of 1-20,000/cm$^2$.

For the higher mesh numbers, it is advantageous to apply a step c) of further growth of the skeleton by electrodeposition after step b).

The method according to the invention comprises after step c), or after step b) when step c) is not applied, a step d) of further growth of the skeleton by electrodeposition of lead to form screen material. For example, by introducing the screen material in an electrodeposition bath containing leadmethanesulphonate and methanesulphonic acid.

In the method according to the invention, in a first step a skeleton of screen material is deposited on an electroforming matrix which is connected as cathode, from a suitable electrodeposition bath for the deposition of copper. An electroforming matrix of this type, which may, for example, be flat or cylindrical, comprises a surface which includes conductive parts, generally in the form of a regular network of interconnected metal dykes, which dykes are delimited by nonconductive parts made from an insulating material, for example photoresist. In this way, a skeleton of copper screen material is formed, the screen openings being delimited by copper dykes corresponding to the pattern of the electroforming matrix. Depending on the conditions, some lateral overgrowth over the nonconductive parts of the electroforming matrix may occur. If desired, after removal of the skeleton, it can be grown further until it reaches the desired thickness, taking into account the requirements with regard to density of holes and passage area (open surface area/ total of open and closed surface area). The open surface area of the screen material obtained will be preferably at least equal to a minimum open surface area, which is determined experimentally in order to obtain the desired advantageous characteristics of the conductor. The lower the density of holes, the higher the minimum open surface area.

Here it should be noted that a method of forming a sieve material by thickening a previously formed, electrically conducting sieve skeleton by metal deposition in an electrolysis bath is known per se from EP-A1-0 492 731. As starting materials of the electrically conducting skeleton nickel and iron are mentioned in the preferred embodiments, while in principle all electrolytically depositable metals can be used in the thickening step. The sieve material thus produced is suitable for various purposes such as screen printing and sieving. Although copper is mentioned as one of the electrolytically depositable metals it is not used in printing screens, because copper will dissolve in the printing ink and pastes conveniently used in screen printing.

The copper bath used may be a conventional electrodeposition bath, such as acidic Cu baths, or baths with an electrolyte such as copper sulphate, copper cyanide, copper fluoroborate, copper pyrophosphate and the like. An example of a bath of this type comprises:

| | |
|---|---|
| $CuSO_4.5H_2O$ | 150-250 g/l |
| $H_8SO_4$ | 50-100 g/l |
| $Cl^-$ | 0-50 mg/l. |

The current density is in the range 1-70 A/dm$^2$, preferably 10-50 A/dm$^2$.

When step c) is not applied, the thickness of the skeleton, and therefore of the screen material, is preferably in the range of 10-45 micrometers. This level of thickness offers sufficient strength to remove the skeleton from the matrix.

The dimensions and shape of the openings may vary. In the case of openings which are circular in cross section, the diameter preferably lies in the range of 50-100 micrometers. This preferred range is determined by factors such as open surface area, mesh number and technical feasibility.

When the optional step c) is applied, the skeleton is grown further by conventional deposition techniques by deposition of a metal which is preferably selected from the group comprising Ag, Zn, Cd, Ni, Pb and Cu or alloys, Cu and Pb being the more preferred metals of this group. The skeleton is advantageously further grown with Cu in an electrodeposition bath, the skeleton being (electrically) connected as cathode. A further growth of the skeleton with Pb may be accomplished by introducing the screen material in an electrodeposition bath containing leadmethanesulphonate and methanesulphonic acid. The final thickness of the screen material is then advantageously over 15 micrometers, preferably in the range of 20-70 micrometers, so that the screen material is still easy to deform, for example to wind. With regard to this deformation, it can be stated in general terms that the thinner the material, the easier the deformation.

Advantageously, the further growth accomplished by step d) complies with the condition $0.5 \leq (a+b)/(c+d) \leq 5$, wherein a+b denotes the further growth in the thickness direction of the skeleton and c+d denotes the further growth in the plane of the skeleton. Screen material which complies with this condition allows of the application of electrically conductive paste in the screen openings from one side. If the values are higher, i.e. a relatively thick further growth, the application of paste, even from two sides, becomes more difficult, with a high probability of air bubbles being included in the paste. This is undesirable with regard to conductivity.

This further growth can be controlled by adding additives (brightening agents) to the composition of the electrodeposition bath, by applying a forced flow of liquid, which for example passes through the openings in the skeleton, and by adjusting the current density. Examples of these effects are described in EP-A-0,038,104, in the name of the present applicant.

An electrical conductor which is produced using the method according to the invention does not have any sharp edges and is therefore easy to handle as an electrode compared to punched or stamped electrode materials. Compared to etched electrode material, an electrical conductor produced in accordance with the invention is characterised by a more uniform thickness, hole shape and hole size. The method according to the invention also allows the production of electrodes with finer grids of openings.

When used as an electrode, the screen material provides more space for active chemical material, and the contact surface between screen material and active chemical material is greater. For instance, a copper foil with a thickness of 35 micrometers and a grid of hexagonal openings of 155 mesh and an open surface area of approx. 10% (approx. 3800 openings/cm$^2$) has an additional contact surface area of approximately 15% compared to solid material.

Furthermore, this contact surface area is further enhanced by the roughening effect of the method according to the invention on the resultant surface of the conductor. This roughening effect is particularly strong when lead is deposited as a surface layer. In general, the roughening effect is dependent on the working conditions of the method according to the invention.

Advantages are also obtained during the assembly of the electrode, such as better adhesion of the active chemical material and the possibility of applying it on one side only, compared to copper products that are currently used for this purpose.

The invention also relates to a solar collector comprising a current collector, made of an electroformed screen material comprising a copper skeleton wherein the screen material has a density of openings that lies in the range of 1-20,000 openings/cm$^2$.

The invention furthermore relates to an electrochemical cell comprising an electrode made of an electroformed screen material comprising a copper skeleton wherein the screen material has a density of openings that lies in the range of 1-20,000 openings/cm$^2$.

The electrical conductors produced using the method according to the invention, can be used as electrically conductive electrode material in batteries and storage batteries, including types based on lithium-ion, lithium-polymer, nickel-cadmium, nickel-metal hydride, zinc-air, nickel-zinc and lead. Another possible application is as a current collector in solar collectors.

The invention is explained below with reference to the appended drawing, in which:

Fig. 1 shows a cross section of a dyke of a further grown skeleton in accordance with the first aspect of the invention;
Fig. 2-9 show examples of a pattern of openings in a conductor produced in accordance with the invention;
Fig. 10 shows the open surface area as a function of the density of holes for an embodiment of an electrical conductor according to the invention; and

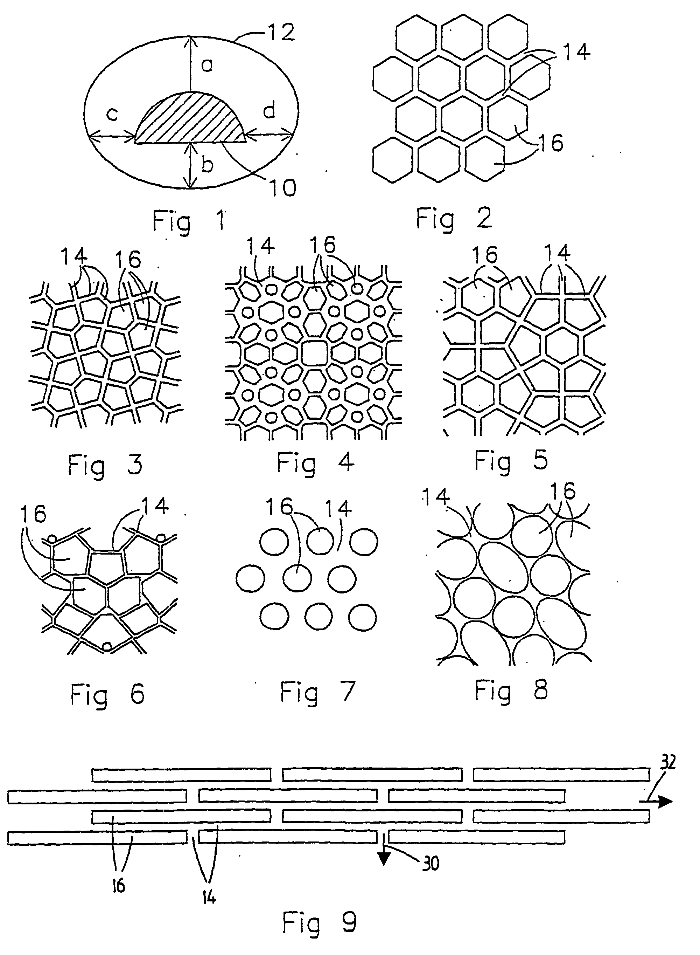

With reference to Fig. 1, this figure shows a skeleton dyke 10 in cross section. For the sake of clarity, only this skeleton web is depicted in hatched form. This skeleton has been produced in the manner described above in accordance with the first aspect of the invention. The planar underside of the skeleton dyke 10 is the side which has been grown onto the metal conductors of the electroforming matrix and includes, as it were, an impression of the shape of the conductor. After the skeleton formed has been removed from the matrix applied, this skeleton is grown further in an electrodeposition bath while a forced flow of liquid is maintained through the openings of the skeleton, to form a screen material with copper dykes 12. As a result, the further growth in the direction of the flow of liquid, i.e. the thickness direction of the skeleton, denoted by a and b, is greater than the further growth in a direction perpendicular to the flow of liquid, in this figure indicated by c and d.

Fig. 2-9 show examples of patterns of interconnected conductive dykes 14 which are separated by nonconductive islands 16, as may be provided in a matrix which is used in a method according to the first aspect. As is clearly apparent, the nonconductive islands 16, which correspond to the openings which are to be formed, may adopt various shapes and dimensions, even within a pattern.

The pattern depicted in Fig. 9 shows a grid with slot shaped openings 16 between dykes 14, wherein the arrow 32 indicates the orientation of high conductance of the conductor and arrow 30 of low conductance of the conductor, respectively. Such a discrimination in conductance by the pattern of the conductor is of interest when the conductor is used in powertools and EV's, for instance.

The table I below shows the maximum open surface area as a function of the number of holes/cm$^2$ for screen materials with a total thickness of 20 micrometers which have been produced on an electroforming matrix with a minimum dyke width of 15 micrometers and a hexagonal grid, as shown in Fig. 2.

Table I

| Holes/cm$^2$ | Mesh No. | Dyke Width Matrix (µm) | Skeleton Thickness (µm) | Skeleton Open Surface Area (%) | |
|---|---|---|---|---|---|
| | | | | Min. | Max. |
| 1 | 2.4 | 100 | 20 | 40 | 97 |
| 10 | 7.5 | 100 | 20 | 30 | 92 |
| 100 | 24 | 70 | 20 | 20 | 80 |
| 1000 | 75 | 30 | 20 | 10 | 63 |
| 10000 | 235 | 15 | 20 | 5 | 24 |
| 10000 | 235 | 15 | 10$^a$ | 5 | 45 |
| 20000 | 335 | 15 | 20 | 3 | 7.5 |
| 20000 | 335 | 15 | 10$^a$ | 3 | 30 |

a : further grown to 20 micrometers in a following step

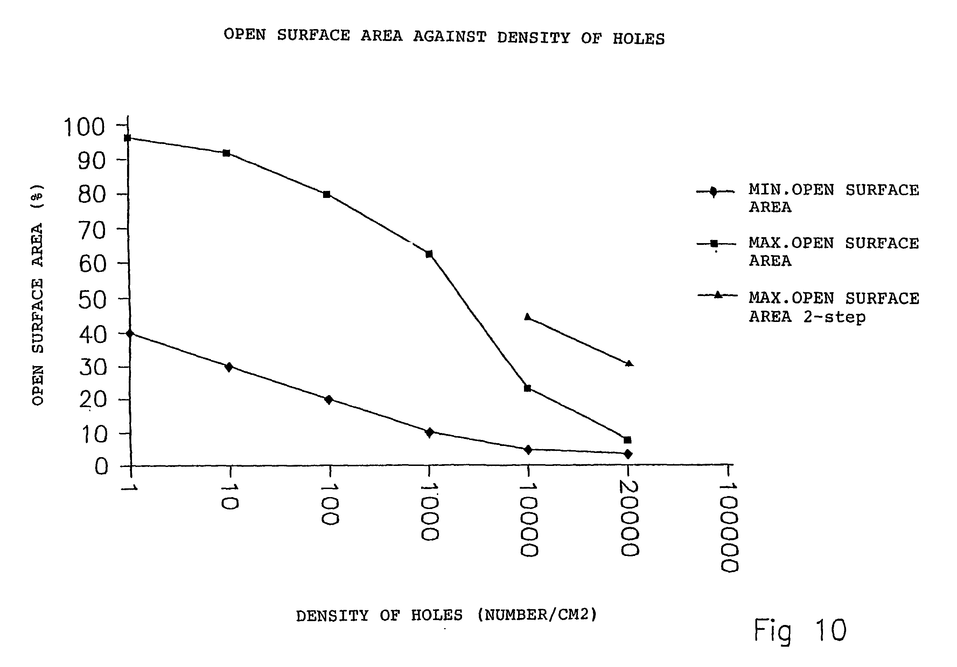

Fig. 10 shows a graph representing this information. A conductor according to the invention has a minimum value for the open surface area (MIN. OPEN SURFACE AREA) in combination with a specific thickness and mesh number, since otherwise the advantages compared to solid material are only marginal. The maximum value is determined by the technique employed. As can be seen, the open surface area can be increased, which offers advantages in particular for the higher mesh numbers (generally a density of holes which is greater than or equal to 10,000), by producing the screen material in two steps. Obviously, even when using the two-step method, a conductor obtained has to comply with the condition relating to the minimum open surface area.

The maximum open surface area (OA) can be calculated for a screen material with a hexagonal grid by applying formula 1:

**EP 1 356 136 B1**

$$OA = \frac{(d\text{-}dyke\text{-}2*th)^2}{(d)^2} \, 100\%$$

(1)

wherein

$$d = \frac{25400}{mesh\ no.} \, (\mu m)$$

dyke = dyke width (μm)
th = thickness of skeleton (μm)
The maximum open surface area is delimited by practical limitations.

**Claims**

1. Method for producing an electrical conductor suitable for use in a device for conversion of energy, which conductor comprises a copper-containing screen material (12), which method comprises the steps of:

   a) using electrodeposition to deposit a copper skeleton (10) on conductive parts (14) of an electroforming matrix in an electrodeposition bath, and
   b) removing the deposited copper skeleton (10) from the electroforming matrix,
   d) a further growth of the skeleton (10) by electrodeposition of lead to form the screen material (12)

   the screen material (12) having a density of openings which lies in the range of 1-20,000/cm$^2$.

2. Method according to claim 1, **characterized in that** the method comprises between step b) and step d), an intermediate step c) of further growth of the skeleton (10) by electrodeposition.

3. Method according to claim 1, **characterized in that** the thickness of the skeleton (10) is in the range of 10-45 micrometers.

4. Method according to one of the preceding claims, **characterized in that** the diameter of the openings in the screen material (12) is in the range of 50-100 micrometers.

5. Method according to claim 1 or 2, **characterized in that** in the intermediate step c) the skeleton (10) is further grown by deposition of a metal which is selected from the group comprising Ag, Zn, Cd, Ni, preferably Cu and Pb, or alloys thereof.

6. Method according to claim 1 or 2, **characterized in that** in step d) the further growth complies with the condition $0.5 \le (a+b)/(c+d) \le 5$, wherein a+b denotes the further growth in the thickness direction of the skeleton and c+d denotes the further growth in the plane of the

7. Solar collector comprising a current collector, made of an electroformed screen material comprising a copper skeleton, having a surface layer of electrodeposited lead, wherein the screen material has a density of openings that lies in the range of 1-20,000 openings/cm$^2$.

8. Electrochemical cell comprising an electrode made of an electroformed screen material comprising a copper skeleton having a surface layer of electrodeposited lead, wherein the screen material has a density of openings that lies in the range of 1-20,000, openings/cm$^2$.

**Patentansprüche**

1. Verfahren zum Herstellen eines elektrischen Leiters, geeignet zur Verwendung in einer Vorrichtung zum Umwandeln von Energie, wobei der Leiter ein Kupfer enthaltendes Netzmaterial (12) aufweist, wobei das Verfahren die Schritte aufweist:

a) Verwendung einer galvanischen Abscheidung, um ein Kupferskelett (10) auf leitenden Teilen (14) einer Galvanoformungs-Matrix in einem galvanischen Abscheidungsbad abzuscheiden, und

b) Entfernen des abgeschiedenen Kupferskeletts (10) von der Galvanoformungs-Matrix,

d) ein weiteres Anwachsen des Skeletts (10) durch galvanisches Abscheiden von Blei, um das Netzmaterial (12) zu bilden,

wobei das Netzmaterial (12) eine Dichte von Öffnungen besitzt, die in dem Bereich von 1-20.000/cm$^2$ liegt.

2. Verfahren nach Anspruch 1, **dadurch gekennzeichnet, dass** das Verfahren, zwischen Schritt b) und Schritt d), einen Zwischenschritt c) eines weiteren Anwachsens des Skeletts (10) durch galvanisches Abscheiden aufweist.

3. Verfahren nach Anspruch 1, **dadurch gekennzeichnet, dass** die Dicke des Skeletts (10) in dem Bereich von 10-45 Mikrometern liegt.

4. Verfahren nach einem der vorhergehenden Ansprüche, **dadurch gekennzeichnet, dass** der Durchmesser der Öffnungen in dem Netzmaterial (12) in dem Bereich von 50-100 Mikrometern liegt.

5. Verfahren nach Anspruch 1 oder 2, **dadurch gekennzeichnet, dass** in dem Zwischenschritt c) das Skelett (10) weiterhin durch Niederschlagen eines Metalls angewachsen wird, das aus der Gruppe ausgewählt ist, die Ag, Zn, Cd, Ni, vorzugsweise Cu und Pb, oder Legierungen davon, aufweist.

6. Verfahren nach Anspruch 1 oder 2, **dadurch gekennzeichnet, dass**, in dem Schritt d), das weitere Anwachsen mit der Bedingung $0,5 \leq (a+b)/(c+d) \leq 5$ übereinstimmt, wobei a+b das weitere Anwachsen in der Dickenrichtung des Skeletts bezeichnet und c+d das weitere Anwachsen in der Ebene des Skeletts bezeichnet.

7. Solar-Kollektor, der einen Strom-Kollektor aufweist, hergestellt aus einem galvanisch geformten Netzmaterial, aufweisend ein Kupferskelett, mit einer Oberflächenschicht aus galvanisch niedergeschlagenem Blei, wobei das Netzmaterial eine Dichte von Öffnungen besitzt, die in dem Bereich von 1-20.000 Öffnungen/cm$^2$ liegt.

8. Elektrochemische Zelle, die eine Elektrode aufweist, hergestellt aus einem galvanisch gebildeten Netzmaterial, aufweisend ein Kupferskelett, das eine Oberflächenschicht aus galvanisch niedergeschlagenem Blei besitzt, wobei das Netzmaterial eine Dichte von Öffnungen besitzt, die in dem Bereich von 1-20.000 Öffnungen/cm$^2$ liegt.

**Revendications**

1. Procédé de fabrication d'un conducteur électrique adapté pour l'utilisation dans un dispositif de conversion d'énergie, lequel conducteur comprend un matériau à tamis contenant du cuivre (12), lequel procédé comprend les étapes consistant à :

a) utiliser l'électrodéposition pour déposer un squelette de cuivre (10) sur des parties conductrices (14) d'une matrice d'électroformage dans un bain d'électrodéposition, et
b) enlever le squelette de cuivre déposé (10) de la matrice d'électroformage,
d) une croissance ultérieure du squelette (10) par électrodéposition de plomb pour former le matériau à tamis (12)

le matériau à tamis (12) ayant une densité d'ouvertures qui se trouve dans la plage de 1-20.000/cm$^2$.

2. Procédé selon la revendication 1, **caractérisé en ce que** le procédé comprend entre l'étape b) et l'étape d), une étape intermédiaire c) de croissance ultérieure du squelette (10) par électrodéposition.

3. Procédé selon la revendication 1, **caractérisé en ce que** l'épaisseur du squelette (10) est dans la plage de 10-45 micromètres.

4. Procédé selon l'une quelconque des revendications précédentes, **caractérisé en ce que** le diamètre des ouvertures dans le matériau à tamis (12) est dans la plage de 50-100 micromètres.

**5.** Procédé selon la revendication 1 ou 2, **caractérisé en ce que** dans l'étape intermédiaire c), le squelette (10) est ultérieurement accru par déposition d'un métal qui est sélectionné à partir du groupe comprenant Ag, Zn, Cd, Ni, de préférence Cu et Pb, ou d'alliages de ceux-ci.

**6.** Procédé selon la revendication 1 ou 2, **caractérisé en ce que** dans l'étape d), la croissance ultérieure satisfait la condition $0,5 \leq (a+b) / (c+d) \leq 5$, où a+b indique la croissance ultérieure dans la direction de l'épaisseur du squelette et c+d indique la croissance ultérieure dans le plan du squelette.

**7.** Capteur solaire comprenant un collecteur de courant, réalisé en un matériau à tamis électroformé comprenant un squelette en cuivre, ayant une couche superficielle de plomb déposé par électrolyse, le matériau à tamis ayant une densité d'ouvertures qui se trouve dans la plage de 1-20.000 ouvertures/cm$^2$.

**8.** Cellule électrochimique comprenant une électrode réalisée en un matériau à tamis électroformé comprenant un squelette en cuivre, ayant une couche superficielle de plomb déposé par électrolyse, le matériau à tamis ayant une densité d'ouvertures qui se trouve dans la plage de 1-20.000 ouvertures/cm$^2$.

Fig 1

Fig 2

Fig 3

Fig 4

Fig 5

Fig 6

Fig 7

Fig 8

Fig 9

OPEN SURFACE AREA AGAINST DENSITY OF HOLES

Fig 10

EP 1 356 136 B1